# EUROPÄISCHE PATENTSCHRIFT

(11) **EP 0 550 563 B1**
(45) Veröffentlichungstag und Bekanntmachung des Hinweises auf die Patenterteilung: **11.12.1996**
(21) Anmeldenummer: 91917185.0
(22) Anmeldetag: 27.09.1991
(51) Int. Cl.: C08J 11/24, C08L 75/04

(54) **VERFAHREN ZUR VERWERTUNG VON KUNSTSTOFFEN**
PROCESS FOR RECYCLING PLASTICS
PROCEDE DE RECYCLAGE DE MATIERES PLASTIQUES

(30) Priorität: 27.09.1990 DE 4030588; 27.09.1990 DE 4030614; 27.09.1990 DE 4030639; 10.05.1991 DE 4115379
(43) Veröffentlichungstag der Anmeldung: 14.07.1993
(60) Teilanmeldung: 96108255.9
(73) Patentinhaber: Demuth, Michael, D-82049 Grosshesselohe (DE)
(72) Erfinder: Demuth, Michael, 82049 Grosshesselohe (DE); Holzapfel, Wolfgang, Dr., 83471 Berchtesgaden (DE)
(74) Vertreter: Kolb, Helga, Dr. Dipl.-Chem.
(86) Internationale Anmeldenummer: EP9101849
(87) Internationale Veröffentlichungsnummer: WO9206130

(56) Entgegenhaltungen:
- GB-A- 797 228
- US-A- 3 300 417

## Beschreibung

Die Erfindung betrifft ein Verfahren zur Verwertung von kompakten und/oder porösen Kunststoffen, die teilweise oder ganz aus Polyurethankunststoffen bestehen.

Zweck der Erfindung ist die technische Verwertung von Polyurethanprodukten, vorzugsweise von Polyurethanschaumstoffabfällen, die in großen Mengen anfallen. Bei der Herstellung von Polyurethan (PUR)-Schaumstoffen fallen bis zu 30 % sortenreiner Abfall an. Ein steigender Anteil von Produkten aus Integralschaumstoffen, die selbst bei geringen Oberflächenfehlern bei sonst technisch einwandfreier Qualität ausgeschieden werden, z.B. bei der Autositzproduktion, machen eine sinnvolle Verwertung erforderlich, wobei diese möglichst im Bereich der eigenen Produktion erfolgen soll.

PUR-Altschäume, z.B. aus der Kraftfahrzeug- oder Möbelentsorgung, fallen in großen Mengen an. Sie enthalten zum Teil toxische Gase, z.B. Fluorchlorkohlenwasserstoffe, die zur Verbesserung des Herstellverfahrens und zur Erhöhung der thermischen Isoliereigenschaften zugesetzt worden sind. Diese Gase müssen vor oder während des Recyclingverfahrens möglichst umweltschonend entfernt und gesammelt werden. Im Anschluß an eine FCKW-Entfernung liegen die PUR-Schaumstoffe üblicherweise als Mahlgut mit einem Korndurchmesser von 1 bis 3 mm vor.

Dieses Schaummehl wird zur Zeit auf Deponien als Sondermüll gelagert. Die Kosten der Endlagerung sind enorm hoch. Wegen der geringen Kapazitäten der Deponien, den Schwierigkeiten bei der Einrichtung neuer Deponieflächen sowie wegen der chemischen Resistenz und der damit verbundenen geringen Zersetzung der PUR-Schäume und deren Verunreinigungen ist es geboten, die Produkte einer wirtschaftlichen Wiederverwertung zuzuführen.

Erschwert wird die Wiederverwertung der Polyurethankunststoffabfälle durch mögliche Verunreinigungen, die den Polyurethanschäumen aufgrund technischer Vorgaben für den entsprechenden Einsatz bei der Herstellung zugegeben oder die beim Recyclingverfahren sekundär zugemischt werden, und die nur sehr kostspielig entfernt werden können. Gleichzeitig besteht ein Bedarf nach einem Verfahren, welches neben der Aufbereitung von PUR-Altmaterial auch im gleichen Verfahren die Aufbereitung anderer Kunststoffe erlaubt.

Als Beispiel sollen die Verunreinigungen von Altschaum aus der Kühlschrankentsorgung genannt werden. Der Polyurethanschaum enthält ca. 5 bis 10 % FCKW; je nach Herkunft des Kühlschranks enthält das PUR-Mahlgut Farben- und Lackreste, Papier- und Metallfolienreste, diverse Kunststoffe und elastomere Kabelreste. Eine gemeinsame Verwertung des Abfalls ohne weitere Trennprozesse ist erwünscht, aber bis heute nicht möglich. Der Anteil der Verunreinigungen liegt häufig bei ca. 10 %, kann aber bis auf ca. 30 % und mehr ansteigen.

Ein weiterer Problemabfall ist die sogenannte Leichtfraktion aus der Automobilverwertung. Sie besteht zu etwa 70 % aus PUR-Schaum. Die restlichen 30 % bilden eine Vielzahl von Kunststoffen unterschiedlichster Zusammensetzung. Gummi- und Polyolefinabfälle sind ebenso vorhanden wie Metall- und Kabelreste, Glas und gelegentlich Holz. Das Ganze ist durch Öl und Fett, Wasser und Bremsflüssigkeit und jede Art von Schmutz verunreinigt. Es besteht die Notwendigkeit, für diesen Abfall eine kostengünstige Wiederverwertung zu finden, um eine Deponierung auf Sonderdeponien zu vermeiden.

Ein Verwertungsverfahren, welches aus diesen Abfallprodukten ein Neuprodukt mit zufriedenstellenden technischen Eigenschaften herstellen läßt, ist daher sowohl aus ökonomischer als auch ökologischer Sicht erstrebenswert.

In manchen Fällen ist die zusätzliche Zumischung von geeigneten Kunststoffen in Polyurethanprodukte, z.B. für die Erhöhung der Druckfestigkeit von Hartschaum, wünschenswert. Die Einbindung von Kunststoffen in eine Schaummatrix kann zu einer wirtschaftlichen Verbesserung führen und erleichert die Entsorgung, wenn zu diesem Zweck Kunststoffabfälle verwendet werden.

Spezielle Probleme bringt z.B. die Verwertung von Autositzen mit sich, die eine Gewebeschicht aufweisen, die bei der Herstellung als Trennmittel gegenüber den Metallformen dient, die Festigkeit der Schaumoberfläche erhöht und den Sitzkomfort verbessert. Bei der Wiederverwertung müssen bisher Schaum und Gewebe, sofern sie überhaupt wiederverwertet werden, mechanisch getrennt werden und getrennt behandelt oder wiederverwertet werden. Dabei werden die Weich-Polyurethanschäume meist als Flocken zur Herstellung von Kissen oder Teppichunterlagen verwendet, die Stoffreste dagegen deponiert oder verbrannt.

Zweck der vorliegenden Entwicklung ist die nebenproduktfreie Herstellung neuer Polyole, die mit Isocyanaten oder anderen geeigneten Härtersystemen härtbar sind und deren Hydroxylgruppen-Gehalt während des Recyclingverfahrens oder durch eine zusätzliche chemische Behandlung auf einen gewünschten Gehalt eingestellt werden kann, unter zusätzlicher Beimischung von Kunststoffen und anderer Füllstoffe, die im kompatibler Weise in die späteren Neuprodukte eingebaut werden können.

In der Patentliteratur werden eine Reihe von Lösungen vorgeschlagen, vorzugsweise Polyurethanschaum wegen seiner großen Oberfläche und der damit verbundenen leichten Bearbeitbarkeit wieder in Polyole zurückzuführen. Die glykolytische Zersetzung mittels organischer Säuren, Aminen oder Glykolen, teilweise unter Verwendung von Katalysatoren, erhöhten Drücken und bei Temperaturen um 200°C, nimmt dabei den größten Raum ein. Keines der beschriebenen Verfahren konnte sich jedoch aus Kostengründen durchsetzen. Nachteilig für die Hydrolyse von PUR ist außerdem, daß bei der Durchführung des Verfahrens Nebenprodukte entstehen, die aus toxischen Gründen abgetrennt und aufwendig entsorgt werden müssen. Diese Verfahren sehen somit nur die Verarbeitung von reinen PUR-Produkten vor; Verunreinigungen müssen vorher oder während des Verfahrens entfernt werden; die für den Prozeß erforderlichen Apparate und Einrichtungen sind aufwendig; die Energiekosten hoch. Es ist daher verständliche, daß sich diese Methoden nicht durchsetzen konnten, und daß nach neuesten Erkenntnissen diese Verfahren kaum Aussicht haben, in Zukunft eingesetzt zu werden.

GB-A-797 228 beschreibt ein Verfahren zur Wiederverwertung von Abfall aus flexiblen Polymermaterialien mit Zellstruktur. Diese Polymermaterialien enthalten Gruppen mit aktiven Wasserstoffatomen und bestehen insbesondere aus Polyestern und Polyesteramiden. Die Abfallprodukte werden in einer flüssigen Reaktionsmischung aus den Polymermaterialien einem organischen Polyisocyanat gelöst und zu Schaumprodukten umgesetzt.

US-A-3 300 417 offenbart ein Verfahren zur Verwertung von Polyurethankunststoffen. Hierbei werden die Polyurethankunststoffe in Gegenwart des Metallkatalysators in einer organischen Flüssigkeit, die im wesentlichen frei von Carbonsäure-, primären und sekundären Aminogruppen ist, gelöst, wobei die Urethangruppen vollständig dissoziiert werden.

Bei Anwendung der vorstehend genannten Verfahren des Standes der Technik erhöht sich aus bekannten Gründen die Hydroxylzahl des entstehenden Polyols. Dies führt zu einem Mehrverbrauch an Isocyanat bei Aushärtung der Neuprodukte. Abgesehen von der damit verbundenen Kostenerhöhung werden dabei allgemein harte Neuprodukte erhalten, was in den meisten Fällen unerwünscht ist.

Auch das bereits im Maßstab einer Pilotanlage erforschte System der pyrolytischen Zersetzung konnte sich ebenfalls nicht durchsetzen, da die Kosten im Verhältnis zum Nutzen zu hoch lagen und bei nicht sortenreinen Kunststoffen unerwünschte Nebenprodukte auftraten, die für sich entsorgt werden mußten, was wiederum die Kosten des Verfahrens erhöhte.

Eine gezielte gemeinsame Verwendung von PUR-Produkten mit anderen Kunststoffen mit dem Ziel der gemeinsamen Weiterverarbeitung ist nicht bekannt, sie ist aber sinnvoll und erforderlich.

Der Erfindung liegt die Aufgabe zugrunde, ein Recyclingverfahren für Polyurethanprodukte unter Vermeidung neuer, zusätzlicher Nebenprodukte zu entwickeln. Dabei soll dieses Verfahren die gemeinsame Verwertung und Auflösung von Polyurethanabfallstoffen mit anderen Stoffen ermöglichen. Zu derartigen Stoffen zählen Kunststoffe im weitesten Sinne, speziell solche, die mit Polyurethanen verbunden, verschäumt oder vermischt vorliegen, z.B. Überzugsstoffe von Sitzen, Papiere, Vliese, Kunststoff- und/oder Metallfolien, sowie Klebstoffe, Farben, Lacke und ggf. Elastomere.

Eine weitere Aufgabe der Erfindung ist die möglichst vollständige Erhaltung der chemischen Bindungen der Polyurethanabfälle beim Recyclingprozeß. Falls erforderlich, soll mit Hilfe des erfindungsgemäßen Verfahrens nach dem Quellen der Polyurethanabfälle die Hydroxylgruppen-Zahl des erhaltenen Reaktantengemisches in optimaler Weise für die nachfolgende Weiterverarbeitung eingestellt werden.

Die vorstehende Aufgabe wird gemäß der Erfindung durch ein Verfahren zur Verwertung von kompakten oder porösen, ganz oder teilweise aus Polyurethan bestehenden Kunststoffen unter Aufbereitung der Kunststoffe zu einem Reaktionsgemisch und Weiterverarbeitung zu neuen Polyurethanprodukten in einem Diisocyanat-Polyadditionsverfahren, dadurch gekennzeichnet, daß die Aufbereitung zu einem Reaktionsgemisch erfolgt, indem man die Kunststoffe in Quellmitteln bei einer Temperatur unterhalb der Zersetzungstemperatur der Kunststoffe anquellen läßt und zu einem fließfähigen Gel mechanisch zerkleinert, und man das Reaktionsgemisch ohne es zu Lösen zu neuen Polyurethanprodukten weiterverarbeitet.

Mit Hilfe des erfindungsgemäßen Verfahrens können universell alle PUR-Kunststoffe aufbereitet werden, die nach dem Diisocyanat-Polyadditions-Verfahren in Kompakter und/oder poröser Form hergestellt sind.

Das erfindungsgemäße Verfahren erlaubt die Mitverwendung im Quellprozeß und den Zusatz von ggf. Kunststoffen, insbesondere löslichen Kunststoffen, Harzen, Wachsen, Elastomeren, Farben, Lacken, Papier, Metallfolien und organischen und/oder mineralischen Fasern zum Behandlungsmittel, wobei dieselben vor, während oder nach dem eigentlichen Quellprozeß zugesetzt werden können. Derartige Kunststoffe können z.B. sein: Polyvinylchlorid, Styrol/Acrylnitril (24-29 %), Polyhydroxyether von Bisphenol A, Polycarbonat, Nitrocellulose, Cellulosebutyrat, Cellulosepropionat, Polyepichlorhydrin, Polyvinylidenchlorid, Styrol/Allylalkoholcopolymere.

Teilweise verträgliche Kunststoffe, z.B. Polypropylen, Poly(buten-1), Polyethylen, Naturkautschuk, Styrol/Butadienelastomere, Styrol/Butadienblockcopolymere, ungestättigte Polyester, Polyvinylacetat, Polyvinylbutyral, Polybutadien, Ethylen/Propylenkautschuk, Polyisobutylen, Polyoxymethylen, Polyoxyethylen, können über Lösungsvermittler eingebracht werden.

Außerdem ist es bei dem erfindungsgemäßen Verfahren möglich, für die Weiterverarbeitung zu neuen PUR-Produkten Komponenten zuzugeben, die deren chemische Eigenschaften positiv beeinflussen, wie z.B. durch Einführung von flammhemmenden chemischen Gruppen in das neu entstandene Polyol. Geeignete Zusatzstoffe sind neben Flammschutzmitteln Weichmacher, Pigmente, Füllstoffe und/oder Fasern.

Die erste Stufe der Wiederverwertung der Kunststoffabfälle ist die vor Zerkleinerung und, sofern erforderlich, die Reinigung. Die Kunststoffe und ggf. die Zusatzstoffe werden vorzugsweise in Schneidmühlen oder Shreddern auf eine Korngröße von ca. 10 bis 30 mm vorzerkleinert und ggf. weiter in Zentrifugalmühlen auf eine Korngröße von < 1 mm Durchmesser feinzerkleinert.

Sortenreine PUR-Schaumabfälle, gleichgültig ob es sich um Hart-, Weich-, Polyether- oder Polyesterschaum oder deren Mischungen handelt, werden, falls erforderlich, zu Flocken von einer Größe von 10 bis 50 mm zerkleinert; eine Reinigung erübrigt sich.

Bei FCKW-haltigen oder verunreinigten Abfällen oder bei Gemischen mit anderen Kunststoffen und bei kompakten PUR-Abfällen werden diese auf eine Korngröße von 1 bis 2 mm gemahlen und vom löslichen Schmutz befreit.

Die meisten Kunststoffe lösen sich in organischen Lösungsmitteln erst nachdem sie zunächst durch das Lösungsmittel angequollen werden und vor der endgültigen Lösung einen Gelzustand durchlaufen. Während dieser Gelphase sind die chemischen Bindungen noch intakt. Das Lösungsmittel drückt lediglich die einzelnen Polymerketten auseinander, ohne daß es zu einer echten Lösung kommt. Die dabei gebildete Gelschicht stört in vielen Fällen das Lösen der Polymeren und Elastomeren, da diese die Diffusion des frischen Lösungsmittels verhindert.

Es ist bei Polyurethanschäumen bekannt, daß sie in organischen Lösungsmitteln anquellen. Polyurethanweichschäume können ein Volumen an Quellmitteln aufnehmen, das ihrem Eigenvolumen entspricht. Bei geeigneter Wahl des Quellmittels kann der Quellgrad sogar ein Mehrfaches des Volumens des Ausgangsschaums betragen, ohne daß ein wesentlicher Abbau der chemischen Verbindungen oder daß hydrolytische Zersetzungen auftreten.

Durch Anquellen wird ein Gel erhalten, in dem die chemischen Bindungen noch erhalten sind, und das noch eine, wenn auch geringe Festigkeit aufweist. Je nach Quellmittel und Temperatur behalten die Schäume ihre Struktur oder werden zu Schleimen, die aber immer noch eine gewisse Festigkeit aufweisen, und einem weiteren Aufschäumen einen so großen Widerstand entgegensetzen, daß der Einsatz von gequollenen Schäumen bei der Wiederverwertung von Polyurethankunststoffen bisher nicht durchgeführt wurde.

Es wurde nun gefunden, daß diese Gele sehr wohl wiederverschäumt werden können, wenn sie vor der Weiterverarbeitung einer mechanischen Behandlung durch Zerkleinerung unterworfen werden.

Nach dem erfindungsgemäßen Verfahren zur Wiederverwertung von Polyurethanabfällen läßt man daher die Abfälle in geeigneten Quellmitteln aufquellen, und zerkleinert sie in geeigneter Weise unter Bildung eines fließfähigen Gels, das zusammen mit den zur Polyurethanbildung notwendigen Komponenten und ggf. unter Zusatz von Hilfsstoffen zu neuen Polyurethanprodukten weiterverarbeitet wird.

Zur Zerkleinerung des nach dem Quellvorgang der Polyurethanabfälle erhaltenen hochviskosen Gels eignen sich speziell Geräte, bei denen hohe Scher- und Prallkräfte in Verbindung mit Kavitation und Ultraschall auftreten, wie es z.B. bei Ultraschallmühlen (Vielkammerkreiselgeräten) der Fall ist. Für die Durchführung des erfindungsgemäßen Verfahrens eignet sich beispielsweise eine Vorrichtung, wie sie unter dem Namen "Supraton" von der Fa. Krupp Buckau Maschinenbau GmbH, Grevenbroich vertrieben wird. Die Einwirkung dieser Kräfte führt zu einer mechanischen Zerkleinernug des Gels, welches nunmehr pump-, gieß- und dosierbar wird und leicht wieder geschäumt werden kann.

Die Polyurethanabfälle können in einem Arbeitsgang zusammen mit dem Quellmittel in der Ultraschallmühle aufgequollen und gleichzeitig zu einem fließfähigen Gel zerkleinert werden. Dieses Verfahren ist besonders für weiche, auf Nußgröße vorzerkleinerte Polyetherschäume geeignet. Der Vorteil dieser Aufbereitung liegt darin, daß der separate Quellprozeß ebenso wie eine aufwendige mechanische Zerkleinerung entfällt, da lediglich vorzerkleinerte Schaumteile verwendet werden. Es ist durch dieses Verfahren möglich, große Mengen Schaum in einem kurzen Zeitraum zu verarbeiten und so die Wirtschaftlichkeit des Wiederaufarbeitungsprozesses zu verbessern.

Erfindungsgemäß lassen sich grundsätzlich zwei Arten von Quellmitteln verwenden: solche, die mit dem Isocyanat reagieren können und solche, die Isocyanat gegenüber inert sind.

Empfehlenswert ist der Einsatz der ersten Gruppe. Vertreter der zweiten Gruppe, z.B. niedrigsiedende Kohlenwasserstoffe, sind dann interessant, wenn sie als Blähmittel bei der späteren Schaumherstellung dienen können. Quellmittel können bei Raumptemperatur flüssig oder fest sein, müssen aber bei der Einsatztemperatur flüssig vorliegen. Als Quellmittel dienen Polyole aller Art. Besonders interessant ist die Verwendung von Polyester- und Polyetherpolyolen, die zur Herstellung weicher und/oder harter Schäume dienen. Bei der direkten Verwertung von Schaumstoffabfällen in der Produktion können die Ausgangspolyole verwendet werden. Bei sofortiger Behandlung in der fabrikatorischen Schaumherstellung kann der Abfallschaum, der noch nicht völlig ausgehärtet ist, leicht gequollen werden und in Gelform der Polyolisocyanatmischung zur Neuverschäumung zugesetzt werden. Für das Gel ist kein Härterzusatz notwendig, sofern es im wesentlichen untersetzt vorliegt. Bei Zusatz von Quellschäumen zur Verwertung in der laufenden Produktion kann es in einigen Fällen notwendig sein, sicherheitshalber einen gewissen Überschuß an Härter zuzugeben. Neben diesen Polyolen als Quellmitteln, die in ihrer Reaktivität, Molmasse und Funktionalität differieren können, sind auch Kettenverlängerer mit zwei- oder mehrwertigen Alkoholen, Glykolen und Polyglykolen einsetzbar, da sie die Altschäume leicht anquellen. Bevorzugt sind Polyester- und/oder Polyetherpolyole mit endständigen primären Hydroxylgruppen, verkappte oder geblockte Polyole.

Eine weitere Gruppe von Quellmitteln stellen Amine dar, wie sie in der Polyurethanchemie eingesetzt werden. Hier sind vor allem die Alkanolamine interessant, da sie keinen hohen Dampfdruck aufweisen und die Herstellungseigenschaften der Schäume günstig beeinflussen. Ferner sind geeignet Diamine, wie z.B. Hydrazin, und Ketamine ebenso wie tertiäre Amine, deren katalytische Wirkung bei der Weiterverarbeitung sehr erwünscht ist.

Als Quellmittel eignen sich auch diverse Weichmacher, speziell Weichmacher auf Esterbasis, wie Phthalate, Citrate und dgl., sofern sie mit dem Endprodukt verträglich sind und die Schaumentwicklung nicht stören.

Harnstoff, gelöst in Glykol, stellt ein gutes Quellmittel dar. Selbst geringe Mengen an Harnstoff führen zu einer erheblichen Reduzierung der Quelltemperatur.

Außerdem sind Carbonsäuren jeglicher Art als Quellmittel gut verwendbar, insbesondere Polycarbonsäuren. Sofern die Polyurethanabfälle mit Metallfolien verunreinigt sind, erleichtern sie als Haftvermittler deren Integration im Neuschaum. Native Fettsäuren, auch in Polymerform, sind ebenfalls gut geeignet.

Außerdem eignen sich als Quellmittel oder Zusätze zu denselben:
- Ester der Fettsäuren; sie lassen sich selbst oder in anderen Systemen leicht verschäumen.
- Native Öle, wie Leinöl oder Tallöl, die ebenfalls als Zusatz für bestehende Schaumsysteme dienen können.
- Die Zugabe von Netzmitteln, z.B. in Form von oberflächenaktiven Silicium-organischen Verbindungen oder Fluorchemikalien, erleichtern ebenfalls die Quellung.
- OH-funktionelle Polymerabkömmlinge des Polybutadiens oder Isoprens können als Quellmittel verwendet werden, sofern sie nicht zu hoch polymerisiert sind.

Die vorliegende Aufzählung an Quellmitteln stellt nur eine geringe Auswahl dar. Die Quellmittel können untereinander verwendet werden. Die Auswahl richtet sich jeweils nach den vorliegenden Schäumen und der später erwünschten Qualität des Endprodukts. Zur Beschleunigung des Quellvorgangs können oberflächenaktive Substanzen und/oder Lösungsvermittler zugesetzt werden.

Zur Quellung werden die zerkleinerten Polyurethanabfälle, ggf. in Anwesenheit geringer Mengen von Verunreinigungen, in einem Anteil von 10 bis 50 Gew.%, vorzugsweise 20 bis 30 Gew.%, dem Quellmittel zugesetzt. Bei der Quellmittelzugabe kann das Schaumvolumen im wesentlichen gleich bleiben oder zunehmen. Dies ist abhängig vom verwendeten Polyoltyp, vom Polyurethanabfall (Hart- oder Weichschaum) und vom Vernetzungsgrad des Polyurethans.

Am leichtesten quillt frisch hergestellter Schaum sofort nach dessen Herstellung, wenn er noch nicht vollständig ausgehärtet ist. Daher eignet sich das erfindungsgemäße Verfahren besonders gut bei der Wiederverwertung von Schaumabfällen direkt nach der Herstellung. Der Quellgrad kann von einigen Prozenten bis 100 oder mehr Prozent betragen. Weichschäume führen zu weichen, glatten Gelen oder sogar zu schleimigen Produkten; die Übergänge bis zum Sol sind gleitend. Auf jeden Fall sollte eine chemische Zersetzung von PUR vermieden werden.

Hartschäume zeigen gelegentlich Quellprodukte, die noch eine relativ hohe Festigkeit aufweisen. Nach Behandlung in einem Vielkammerkreiselgerät führen sie jedoch zu gleichförmigen, fließfähigen Gelen, die ohne Schwierigkeiten wieder verschäumt werden können. Die Mischung aus Quellmittel(n) und Gel kann direkt der Zerkleinerung zugeführt werden. Auf Wunsch kann man einen Teil des Quellmittels durch Zentrifugation abtrennen.

Das Anquellen der Polyurethanschäume kann bei Raumtemperatur oder zur Erhöhung der Quellgeschwindigkeit bei erhöhten Temperaturen vorgenommen werden. Die Temperatur sollte jedoch nur so hoch gewählt werden, daß noch keine hydrolytische Zersetzung auftreten kann, und sollte daher 100°C nicht überschreiten. Vorzugsweise arbeitet man im Bereich von 50 bis 60°C. Dies ist auch die Temperatur, die sich in Ultraschallmühlen unter normalen Bedingungen aufgrund der hohen Scherkräfte einstellt.

Das auf diese Weise hergestellte fließfähige Gel kann getrennt einige Zeit gelagert werden. Eine gelegentlich auftretende Viskositätszunahme kann durch Kühlung verhindert oder verzögert werden.

Die wie vorstehend beschrieben zu einem fließfähigen Gel aufbereiteten Polyurethanabfälle können im folgenden einer gegebenen Polyurethanschaumstoff-Rezeptur mit geeigneter Zusammensetzung zugemischt und wiederverschäumt werden. Im Fall einer Verwendung von Polyolen, ggf. mit anderen Zusätzen als Quellmittel, verschäumt man durch Zugabe einer den reaktiven Wasserstoffatomen im Gel äquivalenten Menge an Isocyanat, ggf. mit geeigneten Hilfsstoffen und Katalysatoren. Je nach Zusatzmenge und Eigenschaften des Altschaums werden die Eigenschaften des neuen Polyurethanprodukts beeinflußt. Da der Großteil der Bindungen im PUR-Abfall nicht hydrolysiert wird, ist die zur Wiederverschäumung erforderliche Isocyanatmenge reduziert, und beschränkt sich auf die für den Neuschaum erforderliche Menge, eventuell unter Zugabe eines Überschusses für den zersetzten Polyurethananteil.

Das Verfahren ist vorzugsweise für Weich- und Halbhartschäume anwendbar und kann auch in Fertigungen eingesetzt werden, bei denen mehrere unterschiedliche Schaumqualitäten hergestellt werden. Man kann die gequollenen und zerkleinerten Altschäume wieder zu Schaum oder auch zu Platten oder Formkörpern verarbeiten, wobei die Qualität der Neuprodukte durch den Zusatz der Gelpartikel variiert werden kann. Die gewünschte Qualität ist durch entsprechende Vorversuche zu entwickeln und richtet sich nach dem vorhandenen Polyurethanabfall und dem verwendeten Polyurethansystem. Besonders geeignet ist das vorliegende Verfahren bei der sofortigen Verwertung von Polyurethanabfällen, die aus der laufenden Produktion, speziell von Schäumen, anfallen. Es ist möglich, die entstehenden Abfälle wie Schwartenabschnitte oder Fehlproduktionen sofort der Quellung und Zerkleinerung zu unterwerfen und dann sogleich oder zu einem späteren Zeitpunkt direkt wieder in die Fertigung einzuführen.

Bevorzugt gibt man das erhaltene Reaktionsgemisch dem Massestrom bei der PUR-Neuverschäumung und/oder in den Misch Kopf der PUR-Mischgeräte.

Der Zusatz von Quellschäumen zur Verwertung in der laufenden Produktion verändert die technischen Eigenschaften der Endprodukte nicht oder unbedeutend. Dies ist besonders wichtig für Schaumhersteller mit einem breiten Produktionsspektrum.

Als gute Quellmittel erwiesen sich di- und trifunktionelle Polyole mit primären Hydroxylgruppen, wobei die difunktionellen Polyole schneller anquellen. Das gleiche gilt für Polyole dieser Gruppe mit niedrigem Molekulargewicht. Ein signifikanter Unterschied im Quellverhalten in Abhängigkeit von der Hydroxylzahl konnte nicht festgestellt werden.

Bei der Verwertung der Polyurethankunststoffe, ggf. in Anwesenheit von Verunreinigungen und Zusätzen, entstehen keine freien, insbesondere toxischen Nebenprodukte; die erhaltene Masse kann in Behältern abgefüllt und entweder sofort oder später weiterverarbeitet werden. Lagerprobleme treten nicht auf. Die festen und/oder wachsartigen Massen müssen vor der Weiterverarbeitung so weit erwärmt werden, daß sie pump- und dosierfähig werden.

Unmittelbar vor Weiterverarbeitung werden zu der so gewonnenen Masse Isocyanatverbindungen und weitere Zusatzstoffe gegeben, und es wird wieder zu Polyurethanprodukten geschäumt. Es können Weich- oder Hartschäume unterschiedlicher Qualität hergestellt werden. Dies hängt unter anderem davon ab, ob zwei- oder dreifunktionelle Epsilon-Caprolactonpolyole eingesetzt werden Ferner spielt hierfür auch das Molekulargewicht und die Hydroxylzahl der Polyole eine Rolle. Epsilon-Caprolactonpolyole besitzen ausschließlich primäre Hydroxylgruppen und eine aliphatische Polyesterkette, woraus eine hohe Hydrolysebeständigkeit, ausgezeichnetes Tieftemperaturverhalten und sehr gutes Rückstellverhalten resultiert. Der Polymerisationsgrad liegt in engen Grenzen. Dadurch werden weiche Schäume niederer Dichte bei tieferen Herstelltemperaturen erhalten. Diese Eigenschaften werden auf die Polyurethansekundärprodukte übertragen. Aufgrund der einheitlichen Struktur der Epsilon-Caprolactonpolyole oder der Epsilon-Caprolactonacrylatpolyole liegen daher die Eigenschaften der Polyurethanendprodukte in engen Grenzen. Solche Produkte können auch variierende Rohstoffe unterschiedlichster Eigenschaften und Herkunft mit aufnehmen, ohne daß die Eigenschaften der Sekundärprodukte zu weit differieren. Aus den Reaktionsprodukten können Formteile, Platten oder Schaum hergestellt werden. Die neuen Schäume können zum Ausfüllen von Hohlkörpern verwendet werden; es können Ortsschäume hergestellt werden.

Bei der Quellung von Polyurethanen ist es in den meisten Fällen erforderlich, die Hydroxylzahl zu senken, um die zur Vernetzung erforderliche Isocyanatmenge aus Kostengründen gering zu halten. Außerdem werden weichere PUR-Schäume erhalten, wenn die Zahl der möglichen Vernetzungspunkte reduziert wird. Darüberhinaus ist es wünschenswert, in der Produktion möglichst mit identischen Rohstoffen und damit gleichen Rezepten zu arbeiten.

In anderen Fällen ist die Erhöhung der Hydroxylzahl erforderlich, um härtere Endprodukte zu erhalten. Beide Korrekturen sind verhältnismäßig leicht zu bewerkstelligen.

Die Verminderung der Hydroxylzahl kann durch teilweises Verestern der OH-Gruppen durch anorganische und organische Säuren Säureanhydriden und/oder Organophosphorderivaten erfolgen. Neben Mono-, Di- oder Polycarbonsäuren können auch dimerisierte Säuren oder Säureanhydride, Fettsäuren oder ungesättigte Säuren verwendet werden. Die Auswahl der Säure richtet sich nach den technischen Eigenschaften, die das Endprodukt aufweisen soll.

Es können, und dies ist bevorzugt, anorganische Säuren verwendet werden, wie z.B. Schwefel- oder Phosphorsäure, oder Organo-Phosphorsäuren. Die Phosphorsäuren haben den Vorteil, daß ihre Salze als flammhemmende Zusätze in den Endprodukten dienen können. Die Veresterung kann bei den anorganischen Säuren leicht durch Zugabe von Metalloxiden oder Calciumsalzen abgebrochen werden. Diese Reaktionsprodukte können entweder als Füllstoffe im System bleiben oder leicht abfiltriert werden.

Eine weitere Methode stellt die Veretherung der OH-Gruppen sowie die Umsetzung mit Aminoharzen nach den Methoden der präparativen Chemie dar.

Eine wirkungsvolle Methode der Verminderung der OH-Gruppen ist die Dehydratisierung der OH-Gruppen. Die einfachste Methode ist die säurekatalytische Dehydratisierung unter Verwendung von Katalysatoren, z.B. von Zinksalzen, metallischem Zink oder Edelmetallen, wie z.B. Palladium.

Da die Verminderung nur einen Teil der Hydroxylgruppen betrifft, ist die Möglichkeit gegeben, schon beim Quell- oder Löseprozeß in einem ganz oder teilweise mit Katalysatoren ausgekleideten Reaktionskessel diese Operation durchzuführen. Da diese Reaktion im sauren Millieu abläuft, sind entsprechende Zusätze vorzunehmen. Die eingesetzten Säuren reagieren ebenfalls unter Veresterung, so daß auf alle Fälle eine genaue Steuerung der Reaktion durch laufende Bestimmung der Hydroxylzahl erforderlich ist. Der Abbruch der Reaktion ist wieder leicht durch Neutralisation durch Calciumsalze möglich.

Sobald die erwünschte Hydroxylzahl erreicht ist, die durch analytische Überwachung des Reaktionsprozesses erkannt wird, ist die Reaktion abzubrechen, die Temperatur zu senken und die unerwünschten Festkörper sind abzutrennen.

Die Quellung sowie die Hilfsverfahren, wie Dehydratisierung, müssen unter definierten Bedingungen durchgeführt werden. Es ist bevorzugt, die Reaktionen unter Schutzgasatmosphäre durchzuführen.

Gegebenenfalls kann die Reaktion auch unter Druck oder im Vakuum und bei erhöhten Temperaturen erfolgen. Die Entfernung von Reaktionsprodukten, wie z.B. Wasser, muß möglich sein. Die gesamte Reaktion muß in einem geschlossenen System durchgeführt werden. Unerwünschte Nebenprodukte, nicht gelöste Kunststoffe und andere Verunreinigungen müssen abgetrennt werden.

Das als Reaktionsgemisch erhaltene Gel wird abgekühlt und kann ggf. nach Einstellung der Hydroxylzahl sofort weiterverarbeitet werden, indem man es kontinuierlich dem Massestrom der Ausgangskomponenten für die Polyurethankunststoffherstellung zudosiert. Bevorzugt wird das aufbereitete Reaktionsgemisch direkt dem Mischkopf der Mehrkomponentenmischgeräte zugeführt, was eine kontinuierliche und besonders effiziente Arbeitsweise erlaubt. Alternativ kann das aufbereitete Reaktionsgemisch zu einem späteren Zeitpunkt weiterverarbeitet werden.

## Patentansprüche

1. Verfahren zur Verwertung von kompakten oder porösen, ganz oder teilweise aus Polyurethan bestehenden Kunststoffen unter Aufbereitung der Kunststoffe zu einem Reaktionsgemisch und Weiterverarbeitung zu neuen Polyurethanprodukten in einem Diisocyanat-Polyadditions-Verfahren,
dadurch gekennzeichnet, daß
die Aufbereitung zu einem Reaktionsgemisch erfolgt, indem man die Kunststoffe in Quellmitteln bei einer Temperatur unterhalb der Zersetzungstemperatur der Kunststoffe anquellen läßt und zu einem fließfähigen Gel mechanisch zerkleinert,
und man das Reaktionsgemisch ohne es zu Lösen zu neuen Polyurethanprodukten weiterverarbeitet.

2. Verfahren nach Anspruch 1, dadurch gekennzeichnet, daß man Kunststoffe, die neben Polyurethankunststoffen zusätzliche Kunststoffe, Harze, Wachse, Elastomere, Farben, Lacke, Papier, Metallfolien, organische und/oder mineralische Fasern enthalten, verwendet.

3. Verfahren nach Anspruch 1, dadurch gekennzeichnet, daß man zur Modifizierung der Endprodukte die in Anspruch 2 genannten Stoffe und ggf. weitere Zusatzstoffe, ggf. in gelöster oder gequollener Form, vor, während und/oder nach der Aufbereitung der Kunststoffe dem Reaktionsgemisch zugibt.

4. Verfahren nach Anspruch 3, dadurch gekennzeichnet, daß man als Zusatzstoffe Weichmacher, Flammschutzmittel, Pigmente, Füllstoffe und/oder Fasern verwendet.

5. Verfahren nach einem oder mehreren der vorhergehenden Ansprüche, dadurch gekennzeichnet, daß man die Kunststoffe und ggf. die Zusatzstoffe in Schneidmühlen oder Shreddern auf eine Korngröße von ca. 10 bis 30 mm vorzerkleinert und ggf. weiter in Zentrifugalmühlen auf eine Korngröße von < 1 mm Durchmesser fein zerkleinert.

6. Verfahren nach einem oder mehreren der vorhergehenden Ansprüche, dadurch gekennzeichnet, daß man die vorzerkleinerten Kunststoffe zusammen mit dem Quellmittel gleichzeitig in Vielkammerkreiselgeräten unter Einwirkung hoher Scher- und Prallkräfte in Verbindung mit Kavitation und/oder Ultraschall unter Bildung eines fließfähigen Gels quellen läßt und zerkleinert.

7. Verfahren nach einem oder mehreren der vorhergehenden Ansprüche, dadurch gekennzeichnet, daß man gemäß als Quellmittel geeignete Polyester- und/oder Polyetherpolyole, vorzugsweise mit endständigen, primären Hydroxylgruppen, verkappte oder geblockte Polyole verwendet.

8. Verfahren nach einem oder mehreren der vorhergehenden Ansprüche, dadurch gekennzeichnet, daß man zur Beschleunigung des Quell oberflächenaktive Substanzen und/oder Lösungsvermittler zusetzt.

9. Verfahren nach einem oder mehreren der vorhergehenden Ansprüche, dadurch gekennzeichnet, daß man die Hydroxylzahl des Reaktionsgemisches durch
1) Verestern mit organischen, anorganischen Säuren, Säureanhydriden und/oder Organophosphorderivaten
2) Verethern
3) Umsetzen mit Aminoharzen und/oder mit Hilfe
4) katalytischer Dehydration an geeigneten Metallen, ggf. unter Zusatz säurehaltiger Hilfsstoffe,
einstellt.

10. Verfahren nach einem oder mehreren der vorhergehenden Ansprüche, dadurch gekennzeichnet, daß man den Quell vorgang in einem zumindest teilweise mit einem Dehydrationskatalysator ausgekleideten Reaktionskessel durchführt.

11. Verfahren nach Anspruch 9 oder 10, dadurch gekennzeichnet, daß man als Dehydrationskatalysator Zink oder Palladium verwendet.

12. Verfahren nach einem oder mehreren der vorhergehenden Ansprüche, dadurch gekennzeichnet, daß man faserhaltige Kunststoffe nach der Aufbereitung zur Freilegung der Einzelfasern defibrilliert.

13. Verfahren nach einem oder mehreren der obigen Ansprüche, dadurch gekennzeichnet, daß das erhaltene Reaktionsgemisch dem Massestrom bei der PUR-Neuverschäumung und/oder in den Mischkopf der PUR-Mischgeräte zugegeben wird.

## Claims

1. Process for utilising compact or porous plastics consisting completely or partly of polyurethane, by working up the plastics to give a reaction mixture and further processing to give novel polyurethane products in a diisocyanate-polyaddition process, characterised in that working up to form a reaction mixture takes place by allowing the plastics to swell in swelling agents at a temperature below the decomposition temperature of the plastics and mechanically comminuting to form a flowable gel, and the reaction mixture is further processed without dissolving it to give novel polyurethane products.

2. Process according to claim 1, characterised in that plastics containing, in addition to polyurethane plastics, additional plastics, resins, waxes, elastomers, paints, varnishes, paper, metal foils, organic and/or mineral fibres, are used.

3. Process according to claim 1, characterised in that to modify the final products, the materials mentioned in claim 2 and optionally further additives, optionally in dissolved or swollen form, are added to the reaction mixture before, during and/or after working up of the plastics.

4. Process according to claim 3, characterised in that plasticisers, flame-protection agents, pigments, fillers and/or fibres are used as additives.

5. Process according to one or more of the preceding claims, characterised in that the plastics and optionally the additives are pre-comminuted in cutting mills or shredders to a grain size of about 10 to 30 mm and optionally further finely comminuted in centrifugal mills to a grain size of <1 mm diameter.

6. Process according to one or more of the preceding claims, characterised in that the pre-comminuted plastics can be swollen and comminuted together with the swelling agent at the same time in multi-chamber rotary apparatuses under the action of high shear and impact forces in conjunction with cavitation and/or ultrasound with formation of a flowable gel.

7. Process according to one or more of the preceding claims, characterised in that suitable polyester polyols and/or polyether polyols, preferably having terminal, primary hydroxyl groups, masked or blocked polyols, are used as swelling agents.

8. Process according to one or more of the preceding claims, characterised in that surface-active substances and/or solubility promoters are added to accelerate the swelling process.

9. Process according to one or more of the preceding claims, characterised in that the hydroxyl number of the reaction mixture is adjusted by
1) esterifying using organic, inorganic acids, acid anhydrides and/or organophosphorus derivatives
2) etherifying
3) reacting with amino resins and/or with the aid of
4) catalytic dehydrogenation on suitable metals, optionally adding acid-containing auxiliaries.

10. Process according to one or more of the preceding claims, characterised in that the swelling process is carried out in a reaction vessel lined at least partly with a dehydrogenation catalyst.

11. Process according to claim 9 or 10, characterised in that zinc or palladium is used as dehydrogenation catalyst.

12. Process according to one or more of the preceding claims, characterised in that fibre-containing plastics are defibrillated after working up to expose the individual fibres.

13. Process according to one or more of the above claims, characterised in that the reaction mixture obtained is added to the mass stream during PUR refoaming and/or to the mixing head of the PUR mixing apparatuses.

## Revendications

1. Procédé d'utilisation de matières plastiques compactes ou poreuses, constitué en totalité ou en partie de polyuréthane, avec une préparation des matières plastiques pour donner un mélange de réaction et un retraitement pour donner de nouveaux produits du type polyuréthanne, dans un procédé à polyaddition-diisocyanate, caractérisé en ce que la préparation faite pour obtenir un mélange de réaction s'effectue en faisant gonfler les matières plastiques dans des agents gonflants, à une température inférieure à la température de décomposition des matières plastiques, et en les broyant mécaniquement pour obtenir un gel fluide, et le mélange de réaction étant retraité sans le dissocier, pour donner de nouveaux produits du type polyuréthanne.

2. Procédé selon la revendication 1, caractérisé en ce que l'on utilise des matières plastiques, qui outre des substances synthétiques du type polyuréthanne contiennent à titre supplémentaire des substances synthétiques, résines, paraffines, élastomères, peintures, vernis, papier, feuilles métalliques, fibres organiques et/ou minérales.

3. Procédé selon la revendication 1, caractérisé en ce que, pour modifier les produits finaux, on ajoute au mélange de réaction avant, pendant et/ou après la préparation des matières plastiques, les substances citées à la revendication 2 et, le cas échéant, d'autres additifs, le cas échéant sous forme dissoute ou gonflée.

4. Procédé selon la revendication 3, caractérisé en ce qu'on utilise à titre de substances supplémentaires des plastifiants, agents de protection contre la flamme, des pigments, charges de remplissage et/ou fibres.

5. Procédé selon l'une ou plusieurs des revendications précédentes, caractérisé en ce qu'on effectue un broyage préalable des matières plastiques, le cas échéant des additifs, dans des broyeurs découpeurs ou des déchiqueteurs, à une taille de grain allant d'environ 10 à 30 mm et, le cas échéant, on effectue en outre un broyage fin dans des broyeurs centrifuges, pour obtenir une taille de grain d'un diamètre inférieur à 1 mm.

6. Procédé selon une ou plusieurs des revendications précédentes, caractérisé en ce qu'on fait gonfler les matières plastiques prébroyées conjointement avec l'agent gonflant, simultanément, dans des appareils centrifuges à plusieurs chambres, en faisant agir des forces de cisaillement en d'impact de valeur élevée, en liaison avec de la cavitation et/ou des ultrasons, en constituant un gel fluide, et l'on broie.

7. Procédé selon une ou plusieurs des revendications précédentes, caractérisé en ce qu'on utilise comme agent gonflant des produits appropriés tels que des polyols de polyester et/ou de polyéther, de préférence avec des groupes hydroxyles de fin de chaîne, primaires, des polyols tronqués ou à blocs.

8. Procédé selon une ou plusieurs des revendications précédentes, caractérisé en ce que, pour accélérer le processus de gonflage, on ajoute des substances tensio actives et/ou des agents de solubilisation.

9. Procédé selon une ou plusieurs des revendications précédentes, caractérisé en ce que l'indice hydroxyle du mélange de réaction est réglé par :
1) estérification par des acides organiques, anorganiques, des anhydrides acides et/ou des dérivés organophosphorés,
2) éthérification,
3) conversion avec des résines amino et/ou à l'aide
4) d'une déhydradation catalytique sur des métaux appropriés, le cas échéant avec addition de substances auxiliaires contenant des acides.

10. Procédé selon une ou plusieurs des revendications précédentes, caractérisé en ce qu'on effectue le processus de gonflement dans une chaudière de réaction revêtue au moins partiellement d'un catalyseur de déshydratation.

11. Procédé selon la revendication 9 ou 10, caractérisé en ce qu'on utilise comme catalyseur de déshydratation du zinc ou du palladium.

12. Procédé selon une ou plusieurs des revendications précédentes, caractérisé en ce que les matières plastiques contenant des fibres sont défibrillisées, après préparation pour libérer les fibres individuelles.

13. Procédé selon une ou plusieurs des revendications précédentes, caractérisé en ce que le mélange de réaction obtenu est ajouté au débit-masse lors du nouveau moussage du PUR et/ou dans la tête de mélange de l'appareil de mélange de PUR.
